# EUROPEAN PATENT SPECIFICATION

(11) **EP 2 817 145 B1**
(45) Date of publication and mention of the grant of the patent: **01.04.2020**
(21) Application number: 12869509.5
(22) Date of filing: 23.02.2012
(51) Int. Cl.: B32B 7/12, B32B 37/12, C09J 7/24, C09J 7/29

(54) **PRESSURE SENSITIVE ADHESIVE SHEET AND METHOD OF PRODUCING THEREOF**
DRUCKEMPFINDLICHE KLEBEFOLIE UND VERFAHREN ZUR HERSTELLUNG DAVON
FEUILLE ADHÉSIVE SENSIBLE À LA PRESSION ET SON PROCÉDÉ DE PRODUCTION

(43) Date of publication of application: 31.12.2014
(73) Proprietor: Dow Chemical Taiwan Limited, Taipei City 105 (TW)
(72) Inventor: KUO, Chungmien, Taipei 11493 (TW)
(74) Representative: Murgitroyd & Company
(86) International application number: PCT/CN2012/000232
(87) International publication number: WO 2013/123619

(56) References cited:
- WO-A1-01/60607
- WO-A1-2009/058466
- WO-A2-2009/028638
- CN-A- 101 903 168
- CN-C- 1 249 186
- JP-A- 2008 179 743
- JP-A- 2010 260 975

## Description

### Field of the Invention

The present invention relates to a pressure-sensitive adhesive (PSA) sheet, and more particularly to a pressure-sensitive adhesive sheet comprising a sheet-form substrate having at least one polyolefin-based resin film and a silicone pressure sensitive adhesive layer formed on the sheet-form substrate. The PSA sheet is applicable to panel displays, articles or constructions, and automobiles, for the purposes of adhesion, protection, and decoration. The following documents may provide useful reference for understanding the present disclosure and the background on the subject of pressure-sensitive adhesives: WO 2009/028638 A2; WO 2009/058466 A1; WO 01/60607 A1.

### Description of the Prior Art

Pressure-sensitive adhesives have been widely used in many technical fields. Compared to acrylic and rubber pressure-sensitive adhesive compositions, silicone pressure-sensitive adhesive compositions are more superior in releasability, its stable adhesive properties (tack, adhesion and cohesion), wettability, anchorage, its electrical-insulation properties, heat resistance, frost resistance, and adhesive ability to various substrates. Therefore, silicone pressure-sensitive adhesive compositions are often employed in the production of such goods such as heat-resistant adhesive tapes, electrically insulating adhesive tapes, heat-seal tapes, masking tapes for metal plating, and the like.

Typically, a silicone pressure-sensitive adhesive layer can be made through a heat-curing process by adding a peroxide catalyst to produce a free radical reaction (peroxide curing method) or by adding a platinum-type catalyst to produce a hydrosilation reaction (addition reaction curing method) on a sheet-form substrate. The use of the addition reaction curing method is preferred because it can minimize the effect of silicone residue contamination on the sheet-form substrate, and effectively control silicone curing by raising the heating temperature to about 100°C or higher, preferably about 120°C or higher.

The sheet-form substrate on the silicone pressure-sensitive adhesive layer can be paper, plastic films such as polyester films and polyimide films, fabrics and textiles, glass wool, or metal foils. Polyester and similar plastic films, such as biaxially-oriented polyethylene terephthalate (PET), are preferred for their transparency and good heat resistance of up to about 180°C. On the polyester film, the silicone pressure-sensitive adhesive composition can be well-cured at a high temperature of from about 120°C to about 160°C and such heat-curing process does not damage the polyester film substrate.

However, polyester film is a comparatively more rigid substrate which is not soft or flexible enough for some applications such as to fold over a curl, non-flat, non-smooth device, and thus the advantages such as good adhesive properties and wettability which would otherwise be associated with the use of the silicone pressure-sensitive adhesive layer will be limited and performance will be impaired.

Other commercially-available soft filmic substrates such as polyethylene films and polypropylene films are often exemplified in relevant art as substrates for pressure-sensitive adhesive tape. Although these typical polyolefin-based films have better flexibility than polyester films, they are not suitable for the addition reaction curing method because of their poor heat-resistant properties. When the silicone pressure-sensitive adhesive composition is coated on the typical polyolefin-based films and cured at a temperature of about 100°C or higher, such films will be damaged, shrunk due to a lack of dimensional stability, or curled under the heat. Moreover, as they have poor anchorage, they can easily be under-cured during the curing process because most of silicone pressure-sensitive adhesive layers cannot be properly cured by using a high curing temperature of about 120°C or higher. Therefore, the typical polyolefin-based films cannot be used as substrates of the silicone pressure-sensitive adhesive sheet in industry.

In view of the above, there is a need for a silicone pressure-sensitive adhesive sheet comprising a well-cured silicone pressure-sensitive adhesive layer and a heat-resistant film substrate with excellent flexibility, softness, releasability, wettability and anchorage applying to panel displays, articles or constructions, and automobiles.

### Summary Of the Invention

The above-noted demands are achieved by the present invention which provides a pressure sensitive adhesive sheet as defined in claim 1.

The present invention further provides a laminated structure as defined in claim 11.

The present invention further provides a method as defined in claim 12.

### Brief Description of the Drawing

Figure 1 shows the peeling force testing method.
Figure 2 shows the 85 µm general grade casting polypropylene (PP) film with a silicone coating layer after curing in Example 3 as a point of comparison.
Figure 3 shows the 55 µm bi-axially oriented polypropylene (BOPP) film with a silicone coating layer after curing in Example 3 as a point comparison.
Figure 4 shows the 80 µm retort grade casting polypropylene (R-103) film with a silicone coating layer after curing in Example 4.
Figure 5 shows the peeling of the 75 µm coated polyethylene terephthalate (PET) film in Example 3 as a point of comparison.
Figure 6 shows the peeling of the 70 µm coated retort grade casting polypropylene (CPP)(R-101) film in Example 3.
Figures 7 shows the thermal analysis data of the four films (BOPP, S-101, S-103, and PP) measured by differential scanning calorimetry as a point of comparison.
Figure 8 shows the thermal analysis data of the three films (R-101, R-103, and PP-114) measured by differential scanning calorimetry.

### Detailed Description of the Invention

The pressure-sensitive adhesive sheet of the present invention will be explained in more details at follows.

The sheet-form substrate suitable to be used in the pressure-sensitive adhesive (PSA) sheet of the present invention comprises at least one polyolefin-based resin film having a melting start temperature (Tmⁱ) of about 120°C or higher, preferably from about 120°C to about 130°C, and having a peak melting temperature (Tm^{p}) of from about 160°C to about 180°C, and preferably about 165°C to about 175°C, measured by differential scanning calorimetry (DSC).

In the present invention, the sheet-form substrate can be a single- or multi-layered polyolefin-based resin film. The sheet-form substrate is preferably a multiple-layered polyolefin plastic film, and more preferably a three-layered polyolefin plastic film. In an embodiment of the present invention, the sheet-form substrate comprises at least one polypropylene homopolymer resin film, at least one polypropylene block-copolymer resin film consisting of propylene units and other non-propylene olefin units, or a combination thereof. The other non-propylene olefin units suitable for the kind of use in the present invention are known in the art; for example but not limited to, ethylene, 1-butene, 2-methyl-1-butene, 3-methyl-1-butene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, methyl-1-pentene, ethyl-1-hexene, dimethyl-1-hexene, propyl-1-heptene, methylethyl-1-heptene, trimethyl-1-pentene, propyl-1-pentene, diethyl-1-butene, 1-nonene, 1-decene, 1-undecene or 1-dodecene. Of these olefins, 1-butene, 1-pentene, 1-hexene and 1-octene are preferred. Propylene may be copolymerized with two or more olefins units. In a preferred embodiment of the present invention, the polypropylene block-copolymer resin film contains from about 50 wt% to about 100 wt% of propylene units in its structure.

The sheet-form substrate is preferably a multiple-layered polyolefin plastic film, and more preferably a three-layered polyolefin plastic film. In the present invention, the polyolefin-based resin film can be obtained from a casting, bi-axially oriented, or blowing process. According to the present invention, the polyolefin-based resin film is, for example but not limited to, a casting polypropylene (CPP) film, a bi-axially oriented polypropylene (BOPP) film, or a blown polypropylene (BPP) film. In a preferred embodiment of the present invention, the CPP film is a retort grade CPP film, and the BPP film is a high heat resistance grade BPP film such as that disclosed in WO 2009/073685. Retort grade films are laminated materials, and can be retorted under the condition of heating at about 130°C for about 30 minutes without breaking and conglutination. The retort films usually have good heat resistance, good moisture protections, and high heat-seal strength properties, and thus are widely use in present food applications. The high heat resistance grade BOPP film is also a preferred film of this application.

The thickness of the sheet-form substrate is, for example, but not limited to, from about 10 µm to about 200 µm, and preferably from about 25 µm to about 150 µm. For protective film applications, the thickness of the sheet-form substrate is about 40 µm to 100 µm.

The silicone pressure sensitive adhesive layer suitable for use in the present invention is an addition-cured releasable silicone pressure sensitive adhesive layer. The addition-cured releasable silicone pressure sensitive adhesive layer is obtained by heat-curing a silicone pressure sensitive adhesive composition, where such composition has not been particularly limited, and references to such composition may be referred: e.g., WO 2004/083334, WO 2004/111151, WO 2006/003853, WO 2007/067332, WO 2008/081913, WO 2009/028638, WO 2009/084726, WO 2010/005113, WO 2011/031452, WO 2011/087146, and the like.

In the present invention, the thickness of the cured silicone pressure sensitive adhesive layer is, for example but not limited to, from about 5 µm to about 200 µm, and preferably from about 10 µm to about 30 µm.

While a variety of the addition-cured releasable silicone pressure sensitive adhesive compositions are included within the scope of the present invention, a preferred addition-cured releasable silicone pressure sensitive adhesive composition is one obtained by heat-curing a silicone pressure sensitive adhesive (PSA) composition comprising (A) polydiorganosiloxane having an average of at least two alkenyl radicals per molecule, (B) organohydrogenpolysiloxane having an average of more than two silicon-bonded hydrogen atoms per molecule, optionally (C) an organopolysiloxane resin, and (D) a platinum-type catalyst.

### Component (A)

The polydiorganosiloxane, which preferably essentially consists of chemically combined dimethylsiloxy units, can be polydimethylsiloxane having an average of at least two alkenyl radicals attached to silicon per molecule. The alkenyl groups in Component (A) can be vinyl groups, allyl groups, butenyl groups, pentenyl groups, or hexenyl groups; however vinyl groups are preferred. The vinyl radicals can be in the backbone or in the terminal position, or a combination thereof. The vinyl-terminated polydimethylsiloxane is particularly preferred. The viscosity of polymerization is arbitrary and may range from low viscosity fluid to solid gum. One or more different Components (A) may be combined in each formulation.

Examples of polydiorganosiloxane in Component (A) include hexenyldimethylsiloxy- terminated polydimethylsiloxane-polymethylhexenylsiloxane copolymers, hexenyldimethylsiloxy-terminated polydimethylsiloxane polymers, vinyldimethylsiloxy- terminated polydimethylsiloxane polymers, vinyl or hexenyldimethylsiloxy-terminated poly (dimethylsiloxane-silicate) copolymers, mixed trimethylsiloxy-vinyldimethylsiloxy terminated poly (dimethylsiloxane-vinylmethylsiloxane-silicate) copolymers, and vinyl or hexenyldimethylsiloxy terminated poly (dimethylsiloxane-hydrocarbyl) copolymers. Preferred examples of Component (A) include hexenyldimethylsiloxy- terminated polydimethylsiloxane copolymers, and vinyldimethylsiloxy-terminated polydimethylsiloxane polymers.

Generally, Component (A) is present in the PSA composition in an amount of from about 20 wt% to about 98 wt%, and preferably about 40 wt% to about 90 wt%.

### Component (B)

Component (B) is a cross-linking agent of the composition. It comprises an organopolysiloxane having an average of more than two silicon-bonded hydrogen atoms per molecule. The position of which silicon is bonded may be at the molecular terminals and/or at the side chain. Groups other than hydrogen atoms that can have silicon bonded to such may be represented by methyl, ethyl, propyl, butyl, pentyl, hexyl, heptyl, or similar alkyl groups; phenyl, tolyl, xylyl, naphthyl, or similar aryl groups; benzyl, phenethyl, or similar aralkyl groups; chloromethyl, 3-chloropropyl, 3,3,3-trifluoropropyl, or similar halogenated alkyl groups, and other substituted or unsubstituted univalent hydrocarbon groups other than alkenyl groups. Most preferable are methyl and phenyl groups. Component (B) may have a linear, branched, cyclic, net-like, or partially branched linear molecular structure. The linear molecular structure is preferable. Although there are no special restrictions with regard to the viscosity of component (B) at 25°C, it is recommended to have a viscosity of within the range of 1.0 to 1,000 mPa.s, and preferably, within the range of 5 to 500 mPa.s.

The organopolysiloxane of component (B) can be exemplified by the following compounds: methylhydrogenpolysiloxanes having both molecular terminals capped with trimethylsiloxy groups, a copolymer of methylhydrogensiloxane and dimethylsiloxane capped at both molecular terminals with trimethylsiloxy groups, a copolymer of methylphenylsiloxane, methylhydrogensiloxane, and dimethylsiloxane capped at both molecular terminals with trimethylsiloxy groups, dimethylpolysiloxane capped at both molecular terminals with dimethylhydrogensiloxy groups, a copolymer of methylphenylsiloxane and dimethylsiloxane having both molecular terminals capped at both molecular terminals with dimethylhydrogensiloxy groups, methylphenylpolysiloxane having both molecular terminals capped with dimethylhydrogensiloxy groups, an organopolysiloxane resin composed of siloxane units represented by formula R²₃SiO_{1/2}, siloxane units represented by formula R²₂HSiO_{1/2}, siloxane units of formula SiO_{4/2}, an organopolysiloxane resin composed of siloxane units represented by formula R²HSiO_{2/2} and siloxane units represented by formula SiO_{4/2}, an organopolysiloxane resin composed of siloxane units represented by formula R²HSi0_{2/2} and the siloxane units represented by formula R²Si0_{3/2} or HSiO_{3/2}, and a mixture of two or more of the aforementioned organopolysiloxanes. In the above formulae, R² may represent the same substituted or unsubstituted univalent hydrocarbon groups other than alkenyl groups as defined above.

The organohydrogensiloxanes of Component (B) are commercially available or can be made by methods known in the art. The required amount of Component (B) depends on the amount of (A) and the application and demand of the PSA sheet, and can be easily adjusted by persons skilled in the art. For example, the total mole ratio of silicone bonded hydrogen to alkenyl group (SiH/Vi) ranges from about 0.5 to about 50, and preferably ranges from about 1 to about 20.

### Optional Component (C)

Component (C) comprises at least one silicone resin built of units selected from the group consisting of R₃SiO_{1/2} (M units), R₂SiO (D units), RSiO_{3/2} (T units), SiO_{4/2} (Q units), and combinations thereof, wherein each R is independently chosen from alkenyl radicals, hydrolysable radicals, or monovalent hydrocarbon group free of aliphatic unsaturation and is comprised of 1 to 20 carbon atoms. Alternatively, each R is an independently selected alkyl group. Alternatively, each R group is methyl.

Preferably, the silicone resins are built from M and Q units (MQ resins), T units (T resins), M, D and Q units (MDQ resins), or M, D, Q, and T units (MDQT resins); however, many other combinations (such as DT, MDT, MTQ, and QDT resins) are also used in industry. In an embodiment of the present invention where the MQ resin is used, the molar ratio of R₃SiO_{1/2} (M units) to SiO_{4/2} (Q units) is from about 0.6:1 to about 4:1. Alternatively, the molar ratio of M:Q is from about 0.6:1 to about 1.9:1. Alternatively, the molar ratio of M:Q is from about 0.6:1 to about 1.0:1. In an embodiment of the present invention where the MDQ resin is used, the molar ratio of M units to Q units is from about 0.5:1 to about 1.5:1, and the D units are present in an amount of from about 1 to about 70 mol% based upon the total number of moles of the aforementioned siloxy units in the MDQ resin copolymer. The resinous copolymer optionally contains from about 0.5 to about 10.0 wt% alkenyl groups such as vinyl group (ViMQ or MDViQ resins) and hexenyl group, or hydrolysable group such as OH group and alkoxy group.

Generally, Component (C) is present in the PSA composition in an amount from about 0 to about 80 weight percent on a resin solid basis. For low adhesion protective films, the preferred amount of Component (C) is about 0 to about 50 weight percent on a resin solid basis. The required amount of Component (C) depends on the application and demand of the PSA sheet, and can be easily adjusted by persons skilled in the art. Desirable adhesive force or peeling property can be designed in PSA products by changing the amount of Component (C).

### Component (D)

Component (D) is a platinum-type catalyst that accelerates cross-linking of the composition. Component (D) may be exemplified by a chloroplatinic acid, an alcoholic solution of a chloroplatinic acid, a platinum-siloxane complex, a platinum-carbonyl complex, a platinum-alkenylsiloxane complex, and a platinum-olefin complex. The platinum-alkenylsiloxane complex is preferable in view of its good miscibility with Component (A). The platinum-alkenylsiloxane complex can be exemplified by 1,3-divinyl-1,1,3,3-tetramethyldisiloxane or 1,1,3,3-tetravinyl-1,3-dimethyldisiloxane.

The appropriate amount of the catalyst to be used will depend upon the particular type of catalyst to be used. Component (D) should be used in an amount sufficient to accelerate curing of the composition. For example, the platinum-type catalyst should be present in an amount sufficient to provide at least 2 parts per million (ppm), alternatively 5 to 200 ppm of platinum in the PSA composition. Alternatively, the platinum is present in an amount sufficient to provide 50 to 150 ppm of platinum on a resin solid basis. The catalyst may be added as a single species or as a mixture of two or more different species. Adding the catalyst as a single species is preferred.

The silicone pressure sensitive adhesive composition used in the present invention is essentially composed of Components (A), (B), (D), and optionally (C). However, the silicone PSA composition of the present invention can further include other additives such as organic solvents, curing reaction inhibitors, anchorage additives, curing reaction adjusters, stabilizers, anti-static agent, silica (fume and precipitated type) and pigments, provided that they do not adversely affect the physical properties of the silicone PSA composition.

The organic solvents can be incorporated in the silicone PSA composition at a freely selected quantity for the purpose of facilitating application to the substrate. Examples of suitable organic solvents include toluene, xylene, hexene, heptane, ethyl acetate, methylethylketone, methylisobutylketone, and similar organic solvents.

The curing reaction inhibitors are added in order to regulate the curing rate of the silicone PSA composition. Examples of suitable inhibitors include ethylenically or aromatically unsaturated amides, acetylenic compounds, silylated acetylenic compounds, ethylenically unsaturated isocyanates, olefinic siloxanes, unsaturated hydrocarbon monoesters and diesters, conjugated ene-ynes, hydroperoxides, nitriles, and diaziridines. Preferably, the inhibitors include 2-methyl-3-butyn-2-ol, 3, 5-dimethyl-1-hexyn-3-ol, 3-methyl-1-pentyn-3-ol, 2-phenyl-3-butyn-2-ol, 1,3-divinyltetramethyldisiloxane, diallyl maleate, bis-2-methoxy-1-methylethylmaleate, and 1-ethynyl-1-cyclohexanol. The curing reaction inhibitor is incorporated in an amount effective for moderating or regulating the coating bath life and the cure rate of the composition.

The silicone PSA composition of the present invention can be prepared by mixing the aforementioned Components (A) to (D), if necessary, with the addition of other arbitrary components. The order of incorporating the individual components is known to persons having ordinary skill in the art. This procedure should not be construed as a limitation, and variations on this procedure can be used as long as the integrity of the components is unchanged and a final viscosity is obtained which allows workability. The mixing of the components can be done by using any equipment known in the art as long as the platinum catalyst is the last component to be added into the silicone coating solution. Mixing of additional components is preferably conducted below the flash point of the components.

The curing temperature of the silicone pressure sensitive adhesive composition ranges from about 90°C to about 150°C, preferably from about 110°C to about 140°C. Therefore, after the obtained composition is applied onto a substrate, it is cured by heating at about 90°C to about 150°C, preferably at about 110°C to about 140°C, to form a silicone adhesive layer on the surface of the substrate. Because the curing reaction of the silicone PSA composition depends on the oven temperature, the oven time and the reactivity of the PSA composition, a lower or higher oven temperature during the curing process can be compensated by an adjustment in the oven time or the amount of the Pt catalyst. The silicone PSA composition of the present invention can be applied to an article or a support by any suitable means such as Mayer Rod coating, roll-coating, knife-coating, blade-coating, knife-over-roll coating, gravure coating, dipping, brushing or spraying.

The adhesive force of the cured PSA layer can be designed by adjusting the amounts of Components A to D and the optional additives and by changing the thickness of the cured layer. The desirable adhesive force ranges from 1 g to 200 g per inch. In the present invention, low adhesive force is preferable. For protective film applications, the adhesive force preferably ranges from 1 g to 20 g per inch.

Accordingly, the present invention also provides a method of producing the pressure sensitive adhesive sheet, which comprises the steps of:
applying a silicone pressure sensitive adhesive composition on at least one surface of a sheet-form substrate, wherein the sheet-form substrate comprises at least one polyolefin-based resin film having a melting point temperature (Tmⁱ) of about 120°C or higher and a peak melting temperature (Tm^{p}) of from about 160°C to about 180°C measured by differential scanning calorimetry (DSC), and
heat-curing the silicone pressure sensitive adhesive composition at a temperature of below the peak melting temperature of the polyolefin-based resin film to form the silicon pressure sensitive adhesive layer on the sheet-form substrate. The preferred curing temperature is from about 110°C to about 140°C.

In an embodiment of the present invention, the method of producing the pressure sensitive adhesive sheet further comprises a step of treating the surface of the sheet-form substrate by a method selected from the group consisting of a corona discharge treatment, a primer treatment, an electronic beam treatment, and a combination thereof before applying the silicone pressure sensitive adhesive composition.

The present invention also provides a laminated structure comprising the pressure sensitive adhesive sheet and a release layer placed on a surface of the silicone pressure sensitive adhesive layer of the pressure sensitive adhesive sheet. The release layer is known to persons having ordinary skill in the art and is made of, for example but not limited to polyethylene, polypropylene, polyester, or a paper source, preferably of polyethylene terephthalate.

Since the sheet-form substrate used in the present invention is resistant to high temperature, the silicone pressure sensitive adhesive layer can be well cured on the substrate. Moreover, the pressure sensitive adhesive sheet of the present invention has excellent conformability due to the soft, flexible, and stretchable properties of the sheet-form substrate, and thus can be used in a variety of applications. For example, the pressure sensitive adhesive sheet of the present invention can be used for protecting panel display devices, for window decorating articles or constructions, and as a coating film for automobiles.

The following embodiments are used to further describe the present invention, and not to limit the scope of the present invention. All modifications and variations which can be easily made by any persons of skill in the art fall within the disclosure of this specification and the scope of the appended claims.

### Examples

### Rolling ball tack test

The ball tack test was done by JIS Z2037 (J. Dow method). The silicone coated film was placed on a 30° ramp face. Then, a series of steel balls, differing in diameter in intervals of 1/32 inch, were individually rolled down the ramp in decreasing order depending on its diameter, over the 3 inch section of adhesive on the ramp, until one ball was stopped within the 3 inch section. The tack value is set to be the number on the steel ball with the longest diameter.

### Finger NNN (No rub-off, No smear, No migration) testing

The testing was used to show the difference in surface cure on silicone coatings. The testing was generally applied to silicone coatings by moving a finger cross the coated and cured samples at room temperature. A good coating would show no rub-off, no smear and no migration. In addition, the coated film could show different degrees of rub-off when a finger forcefully moved across the coated film, which could be taken as an indicator for anchorage performance.

### Peeling adhesion and migration tests of coated protective film

The testing method was applied to measure the release force. In the present invention, adhesive force of the silicone PSA was low. A FINAT testing method was applied to the coated protective film of the present invention.

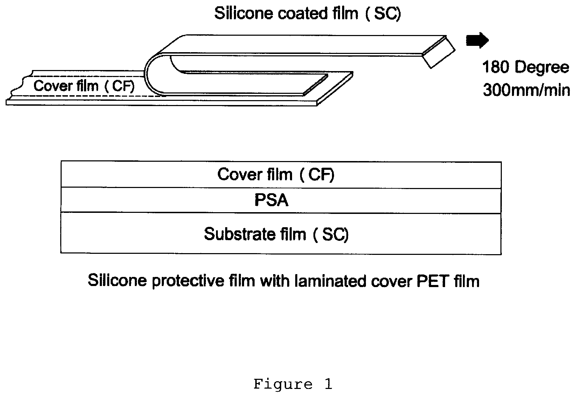

As shown in Figure 1, the cured silicone adhesive coated substrate film (SC) was laminated by a 50 µm polyester film which was used as a cover film (CF). Following the FINAT testing method FTM No. 10, a 180 degree peeling force was measured at a peeling speed rate of 300 mm/min. The peeling force of adhesion was measured by horizontal adhesion/release tester from Chemsultant international (model AR-1500). The adhesion force could be measured by either peeling away silicone coated film (SC) or the cover film (CF). The typical silicone adhesive used to protect film applications can be easily removed and reused. An under cured coating might cause unstable adhesion and also showed migration of silicone coating residues on such devices. The testing of percentage of subsequent adhesion (SAS) of silicone adhesive followed the FINAT test method FTM No. 11 was used to validate the relative degree of migration. The SAS was designated as a percentage of an index number showing the residual's adhesiveness for migration reference. It was compared with a blank film which is not in contact with the silicone adhesive coated substrate.

### Wetting-out speed test

The test was to compare the wetting out speed of silicone coated film when it was flipped onto a glass plate. The glass plate was cleaned by toluene and isopropyl alcohol (IPA) before use. When a pair of coated films was prepared for comparison, the films were laminated by a 2 kg roller roll on a glass plate. Then, the films were peeled off the glass plate at 180 degree for a length of around 2 inches and held on the same length and position. To perform the wetting-out speed test, both films were released simultaneously to see which film had a faster speed to wetting out glass plate.

### Differential screening calorimeter (DSC) test

Both PP and PET films were synthetic polymers with a high degree of crystallization in their structures. The temperature of melting, crystallizing of polymer, and screening thermogram could be detected and analyzed by Differential Screening Calorimetry (DSC). The test was conducted and followed by ASTM D3418 using the equipment of DSC-910 from TA instruments. The thermogram was run at an isothermal initial temperature of -60°C for a minute and then was ramped up to 250°C at a heating rate of 20°C/min. The sample chamber was covered by a constant nitrogen flow. The initial and peak points of melting of heating endothermic were recorded for each initial melting temperature (= melting start temperature (Tₘⁱ) and peak melting temperature (Tₘ^{p}).

### Preparation Example 1: the sheet-form substrates

Eight (8) polypropylene (PP) films were used as explained in the following.
1. Two regular PP films were used. One was a general grade casting polypropylene film having a thickness of 85 µm and the other one was a bi-axially oriented Polypropylene (BOPP) film obtained from Nan-Ya Plastics Co. with a thickness of 55 µm.
2. A series of 70 µm to 80 µm thick casting polypropylene films (CPP) (Trade name: S-101, S-103, R-101 and R-103) manufactured by Shanghai ZiTeng Packaging Co. China was obtained. One of the surfaces of the films had been corona-treated to improve adhesion for coating. The S-101 and S-103 were semi-retort grade CPP films for use in food application and have been specified to be capable of withstanding steam at a temperature of 121°C for 45 minutes. The R-101 and R-103 were retort grade CPP films for use in food application and have been specified to be capable of withstanding steam at a temperature of 135°C for 45 minutes.
3. Two PP films having a thickness of 50 µm made by blowing process using Dow Chemical heat resistant PP resin (Trade name: Inspire™114), in which one of the films was not treated by corona discharge (PP-114N), and the other was treated by corona discharge (PP-114).

### Preparation Example 2: the components in the silicone pressure sensitive adhesive (PSA) composition

The silicone PSA compositions were prepared by mixing the desired amounts of Components (A) to (G) into the following: polydimethylsiloxane (PDMS), crosslinkers, resins, platinum catalysts, inhibitors, and solvents; those additional components were added in any suitable manner such as stirring, blending and/or tumbling and in any suitable order. However, the platinum catalyst is the last to be added into the silicone coating solution.

### Component (A):

Component (A) was the key ingredient in the silicone coating solution, which was prepared from a mixture of vinyl-terminated polydimethylsiloxane. Nine siloxane polymers were used as base ingredients and are described below:
Siloxane Polymer (A-1):
   A branched siloxane polymer as represented in the below structure formula having a viscosity of 380 mPas. (Vi% =0.65 wt%) (Vi(CH₃)₂SiO_{1/2})₄(Vi(CH₃)SiO_{2/2})_{43.5}((CH₃)₂SiO)₂₄₂(SiO_{4/2}) In the formula, Vi designates a vinyl group.
Siloxane Polymer (A-2):
   A vinyldimethylsiloxy-terminated linear-polydimethylsiloxane having a viscosity of 100 mPas. (Vi% = 0.94 wt%)
Siloxane Polymer (A-3):
   A vinyldimethylsiloxy-terminated linear-polydimethylsiloxane having a viscosity of 450 mPas. (Vi% = 0.45 wt%)
Siloxane Polymer (A-4):
   A vinyldimethylsiloxy-terminated linear-polydimethylsiloxane having a viscosity of 2,200 mPas. (Vi% = 0.23 wt%)
Siloxane Polymer (A-5):
   A vinyldimethylsiloxy-terminated linear-polydimethylsiloxane having a viscosity of 9,000 mPas. (Vi% = 0.104 wt%)
Siloxane Polymer (A-6):
   A vinyldimethylsiloxy-terminated linear-polydimethylsiloxane having a viscosity of 55,000 mPas.(Vi% = 0.088 wt%)
Siloxane Polymer (A-7):
   A copolymer gum of trimethylsiloxy-terminated linear-poly(methylvinylsiloxane-co-dimethyl)siloxane. (Vi% = 0.07 wt%)
Siloxane Polymer (A-8):
   A copolymer gum of dimethylvinylsiloxy-terminated linear-polydimethylsiloxane. (Vi% = 0.01 wt%)
Siloxane Polymer (A-9):
   A copolymer gum of trimethylsiloxy-terminated linear-poly-(methylvinylsiloxane-co-dimethyl)siloxane. (Vi% = 0.73 wt%)

### Component (B):

Two organohydrogenpolysiloxane were used as crosslinkers for the base ingredients and are described as follows:
Crosslinker (B-1):
   Trimethylsiloxy-terminated polymethylhydrogensiloxane containing 1.6 wt% of hydrogen atoms and having a viscosity of 30 mPas at 25°C.
Crosslinker (B-2):
   Trimethylsiloxy-terminated poly(methylhydrogenco-dimethyl) siloxane containing 1.05 wt% of hydrogen atoms and having a viscosity of 30 mPas at 25°C.

### Component (C):

Three silicone resins were used as base ingredients and are described below:
Silicone resin (C-1):
   A polysiloxane resin of trimethylsiloxy-terminated methylpolysiloxane resin with MQ polymeric structure, i.e., M_{0.74}Q₁ with 76% solid in solution.
Silicone resin (C-2) :
   A vinyl dimethylsiloxy-terminated methylpolysiloxane resin which has a structure of ViM_{0.74}Q₁ with Vi%=1.94 wt%.
Silicone resin (C-3):
   A hydroxyl-terminated methylpolysiloxane resin which has polymeric structure of M_{1.07}D_{1.03}Q_{1.45}.

### Component (D) :

The platinum-type catalyst of a platinum-siloxane complex solution, prepared from platinum dichloride and 1,3-divinyltetramethyldisiloxane according to the method described in U.S. Patent 5,175,325, was employed as Component (D), and diluted by polydimethylsiloxane, to have a platinum content of about 5000 ppm.

### Component (E):

Hydrosilylation reaction inhibitors employed as component (E) are described as follows:
ETCH: 1-ethynyl-1-cyclohexanol (Aldrich)(E-1)
MB: 2-methyl 3-butyn 2-ol (Fluka)(E-2)
VD: 1,3-divinyltetramethyldisiloxane(E-3)

Component (F): Organic solvents such as ethyl acetate, toluene, xylene, and heptane were used in the following examples.

Component (G): An anchorage additive such as Dow Corning Syl-Off 9250 additive was used.

### Preparation Example 3: the silicone coating solutions (the silicone PSA compositions)

Six solutions were prepared for evaluation. Solutions A, E and F are silicone mixtures dispersed in a solvent, and solutions B, C and D are 100% pure solid silicone mixtures.

### Solution A:

The base of Solution A was prepared by three vinyl functional polydimethylsiloxane polymers (A-1, A-5, and A-6), a high molecular weight PDMS gum (A-7), a silicone MQ resin (C-1), and a trace amount of inhibitors (E-1 and E-3) in a toluene dilution. The mixture has a viscosity of 6,500 mPas and a solid content of 88% in toluene. The mixture was diluted to have a solid content of 40% in heptane, and then 2.0 wt% of a crosslinker (B-1), 2.0 wt% of an anchorage additive, and 120 ppm platinum catalyst were added to the silicone base. The components of Solution A are listed in Tables 1-A and 1-B.

### Solution B:

As shown in Table 1-A, the base of Solution B was prepared by mixing a vinyl functional PDMS Polymer (A-4) and a vinyl functional MQ resin (C-2) with an inhibitor (E-1) and diluting it with a solvent to have a solid content of 25% in the solution. Then, as shown in Table 1-B, a crosslinker (B-1), an anchorage additive (G), and 120 ppm platinum-type catalyst (D) are thoroughly mixed with the solid solution.

### Solution C:

As shown in Table 1-A, the base of Solution C was prepared by mixing a vinyl functional PDMS polymer (A-3) and a resin (C-3) with an inhibitor (E-2) and diluting it by heptane to have a solid content of 75% in the solution. Then, as shown in Table 1-B, a crosslinker (B-1), an anchorage additive, and 80 ppm platinum catalyst were added to the solid solution.

### Solution D:

The base of Solution D was prepared by mixing PDMS polymer (A-2), polymer (A-7), and resin (C-3). The mixture was diluted by heptane to have a solid content of 30% in the solution, and then a crosslinker (B-1), an inhibitor (E-2), an anchorage additive, and 100 ppm Platinum catalyst were added to the solid solution. The components of Solution D are listed in Tables 1-A and 1-B.

### Solution E:

The base of Solution E was prepared by mixing PDMS polymer (A-5), polymer (A-8) and polymer (A-9). The mixture has a viscosity about 50,000 mPas and a solid content of 47% in toluene. The mixture was diluted by heptane to have a solid content of 25% in the solution, and crosslinkers (B-1 and B-2), inhibitors (E-2 and E-3), an anchorage additive and 100 ppm platinum catalyst were added to the solid solution. The components of Solution E are listed in Tables 1-A and 1-B.

### Solution F:

The base of Solution F was prepared by mixing PDMS polymer (A-8), polymer (A-9) and resin (C-1). The mixture has a solid content of 61% in toluene. The mixture was diluted by heptane to have a solid content of 25% in the solution, and a crosslinker (B-1), an inhibitor (E-2), an anchorage additive and 100 ppm platinum catalyst were added to the solid solution. The components of Solution F are listed in following Tables 1-A and 1-B.

The comparison testing was done on 50 µm PET films. Table 3 shows the peeling force of coated PET films when coating was cured at different curing temperatures of 110°C, 120°C, and 130°C for 1 minute. As the coated PET film was cured at a temperature in the range from 110°C to 130°C for one minute, the peeling force obtained from the coated PET film (b) in Table 3 can be used to be compared with the coated CPP films (R-103) in Table 2. As shown in Table 2, as curing time increases, the difference in the peeling force of the well-cured coated PP films (R-103) are substantially the same as that of the coated PET films. But, the peeling adhesion from the R-103 films is slightly higher than that from the PET films due to substrate's characteristic.

**Table 2**

| No. | CPP films | Curing time, min at 120°C | Surface NNN testing | Rub-Off | Peeling CPP-RT-1D | Peeling PET-RT-1D | Peeling CPP-70°C | Peeling PET-70°C |
|---|---|---|---|---|---|---|---|---|
| (1) | S-101 | 3 | trace smear | No | (8.0) | (12.7) | (16.3) | (13.2) |
| | | | | | 3.2 | 5.1 | 6.5 | 5.3 |
| (2) | S-101 | 4 | Near OK | No | (3.2) | (3.1) | (11.7) | (7.9) |
| | | | | | 1.3 | 1.2 | 4.7 | 3.2 |
| (3) | S-103 | 2 | trace smear | No | (24.1) | (15.1) | (24.6) | (12.9) |
| | | | | | 9.6 | 6.0 | 9.8 | 5.2 |
| (4) | S-103 | 3 | Near OK | No | (3.5) | (3.6) | (11.6) | (7.7) |
| | | | | | 1.4 | 1.4 | 4.6 | 3.1 |
| (5) | S-103 | 4 | OK | No | (2.6) | (2.2) | (8.9) | (6.0) |
| | | | | | 1.0 | 0.9 | 3.6 | 2.4 |
| (6) | R-103 | 2 | OK | No | (3.1) | (2.7) | (4.2) | (3.1) |
| | | | | | 1.2 | 1.1 | 1.7 | 1.2 |
| (7) | R-103 | 1.5 | OK | No | (3.9) | (3.6) | (4.3) | (3.2) |
| | | | | | 1.6 | 1.4 | 1.7 | 1.3 |
| (8) | R-103 | 1 | OK | No | (3.6) | (3.0) | (5.0) | (3.6) |
| | | | | | 1.4 | 1.2 | 2.0 | 1.4 |

| | | | | | | | | |
|---|---|---|---|---|---|---|---|---|
| Unit of peeling force: (g/in) N/m | | | | | | | | |

S-101 and S-103 are used as comparative examples and R-103 is used as a practical example.

**Table 3**

| No. | silicone Thickness (µm) | Curing condition | Surface NNN testing | Rub-Off | Peeling force (SC) PET-RT | Peeling force (SC) PET-70°C | SAS% |
|---|---|---|---|---|---|---|---|
| (a) | 12 | 110°C/1min | OK | No | (2.8) | (3.5) | 92.7 |
| | | | | | 1.1 | 1.4 | |
| (b) | 13 | 120°C/1min | OK | No | (2.0) | (3.3) | 95.6 |
| | | | | | 0.8 | 1.3 | |
| (c) | 12 | 130°C/1min | OK | No | (1.9) | (3.2) | 96.6 |
| | | | | | 0.8 | 1.3 | |

| | | | | | | | |
|---|---|---|---|---|---|---|---|
| Unit of peeling force: (g/in) N/m | | | | | | | |

The PET film is used as a comparative example.

As the CPP film is softer than the PET film, the peeling force from the CPP film (R-103) is slightly higher than that from the PET film when having the same adhesive and similar thickness. This difference may be due to the softness of the CPP film, allowing a closer to 180 degree peeling angle than the more rigid PET film substrate.

The wetting-out speed test shows that the coated CPP film can wet fast and more effective at wetting due to its soft and flexible characteristics, and such characteristics would not be compromised even when the coated CPP film has higher thickness (70 µm to 80 µm). On the other hands, the coated PET film shows poor wetting out due to its rigid property. The coated CPP film has good wetting function on flat glass surface and has better conformability on curled and/or sharp device.

### Example 2 (Solution B)

The example is to compare the peeling force of different films. All the silicone coating layers of Solution B on the films have a thickness of about 10 µm. The curing condition for coating in the oven is set at 120°C for 2 minutes. It is observed that the coated firms did not demonstrate rub-off or smearing under the NNN testing. The result of the comparison testing of peeling adhesion from the silicone coated PET films (SC) with a thickness of 50 µm and the laminated PET films with a thickness of 50 µm (non-coated PET cover film; CF) are listed in Table 4.

**Table 4**

| Peeling force RT-1hr-PET(CF) | Peeling force RT-1hr-PET(SC) | Peeling force RT-3D-PET(CF) | Peeling force RT-3D-PET (SC) |
|---|---|---|---|
| (6.3) | (8.7) | (10.7) | (8.8) |
| 2.5 | 3.5 | 4.3 | 3.5 |

| | | | |
|---|---|---|---|
| Unit of peeling force: (g/in) N/m | | | |

Table 5 shows the peeling force of the retort grade CPP film (R-103) aged at intervals from 1 hour and 3 days. As shown in Table 5, comparing the peeling force between the silicone coated film (SC) and cover PET film (CF), the peeling adhesion of the PET film (SC) in Table 4 is lower than the peeling adhesion of the coated CPP film. Such result is similar to the result shown in Table 2 for Solution A. As to the peeling force of the coated PET film (CF), the testing adhesion has a value of about 10 g/in. It is foreseeable that the peeling adhesion is influenced by the substrate film. Table 5 also shows the low value of ball tack data and high SAS% of a very low migration.

**Table 5**

| Layer thickness (µm) | Peeling force RT-1hr-CPP(SC) | Peeling force RT-3D-CPP(SC) | Peeling force RT-3D-PET(CF) | Ball tack | SAS% |
|---|---|---|---|---|---|
| 10 | (15.1) | (16.0) | (10.2) | #1 | 99 |
| | 6.0 | 6.4 | 4.1 | | |

| | | | | | |
|---|---|---|---|---|---|
| Unit of peeling force: (g/in) N/m | | | | | |

### Example 3 (Solution C)

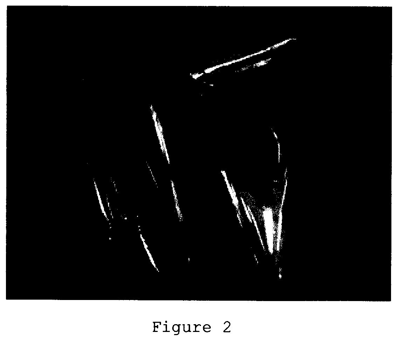

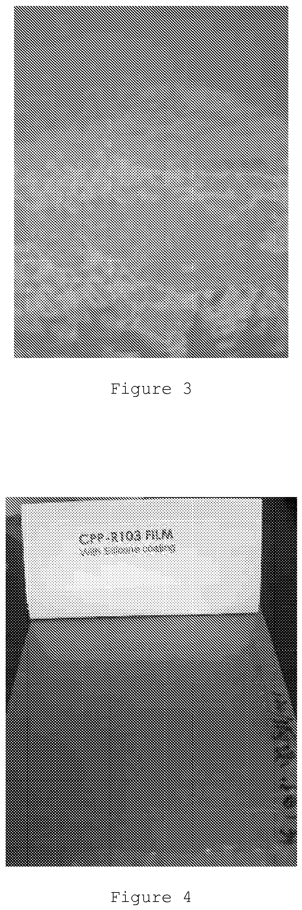

The example is to compare the relationship between film flexibility and peeling adhesion force of different films. The curing condition for coating in the oven is set at 130°C for 2 minutes for the PP films (R-101, BOPP and PP) and at 150°C for 1 minute for the PET films. It is observed that there is still no rub-off phenomenon for all coated films by rubbing with finger over the films, following the NNN testing. When comparing the appearance of the coated films in Table 6, the flatness of the adhesive surface varies substantially after drying the silicone adhesive coating layer. Figure 2 shows that the 85 µm general grade PP films has completely curled up and becomes twisted after being removed from the oven. Additionally, Figure 3 shows that the 55 µm BOPP film has clear wave ripples on the surface, whereas Figure 4 shows that the 80 µm retort grade CPP film (R-103) has a smooth flat coating.

In addition, the peeling testing at 180 degree and the migration testing by SAS show some differences between the films. As shown in Table 6, the silicone coated PET film (No.1) with a thickness of 75 µm has a lower peeling adhesion than that of other PP films, and also has a lower percentage of SAS than the others.

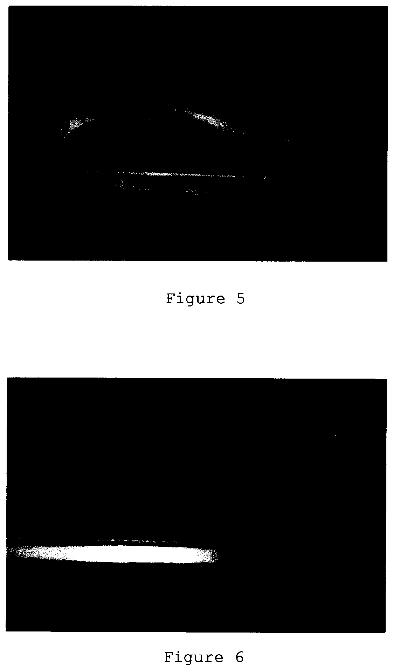

Figures 5 and 6 show the peeling of the coated PET film and the coated CPP(R-101) film. As shown in Figure 5, the 75 µm PET film (No.1) has difficulty in bending to 180 degree for the peeling testing (deriving at a result of peeling speed of 0.3 m/min), and thus the peeling force is significantly lower. On the other hand, as shown in Figure 6, the 70 µm CPP film R-101 (No.3) is more flexible and can be bended to near 180 degree. The result proves the difference in flexibility between the softer CPP films and the more rigid PET films.

The following test compares the 50 and 75 µm PET films, 70 µm CPP film, 55 µm BOPP film, and 85 µm general grade casting PP film after being aged for one day. The peeling adhesion test was conducted by peeling off the 50 µm cover PET film or coated film, and the results are shown in Table 6.

**Table 6**

| | | Peeling force Coated (SC) | Peeling force Coated (SC) | SAS(%) | Layer thickness (µm) | Surface flatness |
|---|---|---|---|---|---|---|
| No. | Aged condition | 1D/RT | 70°C/1L | 70°C/1D | | |
| 1 | 75µm-PET | (15.4) | (24.7) | 82.2 | 17 | smooth |
| | | 6.2 | 9.9 | | | |
| 2 | 50µm-PET | (21.1) | (32.9) | 93.7 | 15 | smooth |
| | | 8.4 | 13.2 | | | |
| 3 | 70µm-R-101 | (23.4) | (33.4) | 98.0 | 16 | smooth |
| | | 9.4 | 13.4 | | | |
| 4 | 55µm-BOPP | (33.0) | (58.4) | 94.5 | 11 | wave ripples |
| | | 13.2 | 23.4 | | | |
| 5 | 85µm-PP | | | | 15 | curling |

| | | | | | | |
|---|---|---|---|---|---|---|
| Unit of peeling force: (g/in) N/m | | | | | | |

The substrates of No.1, 2, 4 and 5 are used as comparative examples. The substrate No.3 is used as a practical example. Among of all of the samples, only No.3 shows positively for all three properties (good flexibility, heat resistance after being aged at high temperature and good adhesive force).

### Example 4 (Solution D)

The example is to compare the performances of peeling adhesion force stability in Solution D. Solution D comprises the OH-terminated MDQ resin. The coatings were applied to the retort grade CPP film (R-103), and the curing condition is set at 120°C for 2 minutes. The peeling test was done by peeling off the silicone coated PET film and coated CPP film. As shown in Table 7, the coated CPP film shows a higher peeling force than the coated PET film, even though they have similar SAS (%). It is clear that the peeling force is relevant to the materials of the films.

**Table 7**

| | Aged day | Layer thickness (µm) | Peeling force PET-1D-RT (SC) | Peeling force PET-1D-70°C (SC) | SAS (%) |
|---|---|---|---|---|---|
| 50 µm-PET | 1 | 9 | (6.9) | (9.4) | 87.8 |
| | | | 2.8 | 3.8 | |
| CPP(R-103) | 1 | 10 | (15.8) | (21.6) | 91.5 |
| | | | 6.3 | 8.6 | |

| | | | | | |
|---|---|---|---|---|---|
| Unit of peeling force: (g/in) N/m | | | | | |

In Table 8, this is another set of silicone adhesive coated films. The coated PET (50 µm) and the coated retort grade CPP films (R-103) were laminated by PET and aged at room temperature for 1 day and 105 days. These data in Table 8 shows the stability of the aging effect at room temperature over time.

**Table 8**

| | Layer thickness (µm) | Peeling force 1D lamination (SC) | Peeling force 105D-lamination (SC) |
|---|---|---|---|
| PET | 10 | (7.0) | (11.8) |
| | | 2.8 | 4.7 |
| CPP(R-103) | 10 | (12.6) | (21.4) |
| | | 5.0 | 8.6 |

| | | | |
|---|---|---|---|
| Unit of peeling force: (g/in) N/m | | | |

### Example 5 (Solution E)

The example is to compare the performance of stability of peeling adhesion force at very low peeling adhesion force by Solution E. Solution E uses vinyl functional silicone polymers but contains no silicone resin. The coatings were applied to the retort grade CPP film (R-103), two heat resistance grade blown PP films (PP-114 and PP-114N), and PET films, the curing condition of silicone coating is set at 120°C for 2 minutes. The peeling test was done by peeling off the cover PET film after being laminated at room temperature for one day. The extra low peeling force film is good when applied to large area protection applications, and the coated protective film can be easily wet and peeled, but cannot easily dropped out of devices.

The anchorage of the films was measured after curing for 2 days. As shown in Table 9, most of the films have no rub-off (RO) phenomenon, but the 75 µm PET and the film PP-114N, which both were not treated by corona discharge, can also easily have the rub-off phenomenon after being heat curing from the oven.

**Table 9**

| Film | Film thickness (µm) | Layer thickness (µm) | Peeling force PET-RT 1D | Peeling force PET-70°C | RO |
|---|---|---|---|---|---|
| PET-50 | 50 | 13 | (1.0) | (1.0) | No |
| | | | 0.4 | 0.4 | |
| PET-75 | 75 | 12 | (1.2) | (2.6) | Yes |
| | | | 0.5 | 1.0 | |
| R-103-80 | 80 | 13 | (0.6) | (0.7) | No |
| | | | 0.2 | 0.3 | |
| PP-114 | 50 | 9 | (0.8) | (0.8) | No |
| | | | 0.3 | 0.3 | |
| R-101-70 | 70 | 14 | (0.7) | (1.8) | No |
| | | | 0.3 | 0.7 | |
| PP-114N | 50 | 10 | (0.9) | (1.8) | Yes |
| | | | 0.4 | 0.7 | |

| | | | | | |
|---|---|---|---|---|---|
| Unit of peeling force: (g/in) N/m | | | | | |

The sample using R-101 or R-103 showed good adhesion between PSA layer and corona treated substrate.

### Example 6 (Solution F)

Solution F was designed to have a high peeling adhesion force to be conducted an environment testing and it contains a larger amount of the silicone resin in the formulation. The curing condition of the silicone PSA coating is set at 120°C for 1 minute. The peeling adhesion force results are shown in Table 10. The films R-103, R-101, and PP-114 were laminated on a glass plate and aged in a high temperature and high humidity environment (70°C/90% RH) for six days. Table 10 shows that the three films have higher peeling forces. It is also observed all three films have no rub-off phenomenon and no migration of adhesive onto the glass plate.

**Table 10**

| No. | Film thickness (µm) | Layer thickness (µm) | Peeling force PET-RT-1D | Peeling force PET-70°C | Aged RO | Aged Migration to glass |
|---|---|---|---|---|---|---|
| R-103 | 80 | 14 | (63.8) | (89.3) | No | No |
| | | | 25.5 | 35.7 | | |
| R-101 | 70 | 12 | (79.5) | (88.6) | No | No |
| | | | 31.8 | 35.4 | | |
| PP-114 | 55 | 11 | (122.1) | (126.0) | No | No |
| | | | 48.8 | 50.4 | | |

| | | | | | | |
|---|---|---|---|---|---|---|
| Unit of peeling force: (g/in) N/m | | | | | | |

### Example 7: Measurement of Differential Screening Calorimeter (DSC)

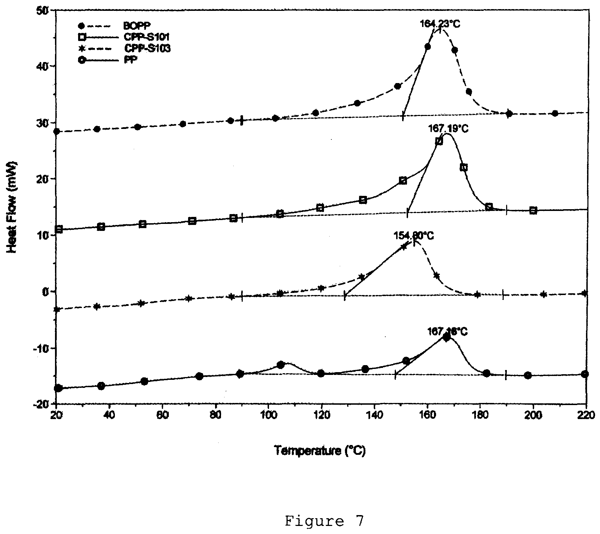

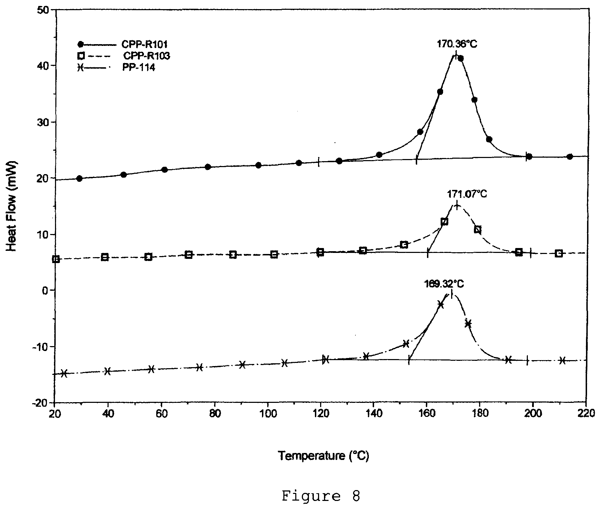

Because both PP and PET films come from polymers with a high degree of crystallization, they have a unique melting and crystallizing endothermic profile to be identified for each structure. Figures 7 and 8 show the thermal analysis data of the seven films: PP, BOPP, S-101, S-103, R-101, R-103, and PP-114 (measured by DSC). We can recognize a sharp melting endothermic peak from isotatic sequence of propylene. The key endothermic crystal melting temperature of the retort grade film is about 170°C. However, we can identify a small amount of melted crystals shown as the tails located at a lower temperature part of endothermic peak. As indicated, the peak area ratio in Table 11 is defined by the ratio of the peak area of less than 140°C to the total peak area. When the low parts of the peak area (<140°C) accounts for less than 5% of the total peak area, it shows that there is good heat resistance. The retort grade PP films have such good heat resistant performance. Some of PP films are made by multiple layers such as typical three layers for CPP film. If part of layer of the PP film contains a layer that does not have good heat resistance characteristic, such will cause the film to contain more low temperature crystals. These low temperature crystals cause unstable curing for the coated silicone PSA and reduce the heat resistance of the film. Thus, only the retort grade films (R-101 and R-103), and heat resistance grade PP-114 has a trace amount of low temperature melting crystals, and the films can withstand higher temperature applications as the suggested temperature is higher than 135°C. The semi-retort grade PP films, such as S-101, S-103 and BOPP film from Nan-Ya, are partial softened or melted when faced a temperature higher than 120°C. Therefore, the films may encounter difficult when attempting to withstand high tension in a roll-to-roll coating process. As most components of the general grade casting PP film have a high area ratio of low temperature melted trail peak of around 100°C, such PP film has the worst performance.

According to the DSC data with above-noted curability of the silicone adhesive coating, we can recognize that a good heat resistance grade PP film is preferred for the silicone adhesion coating layer. The melting temperature measured by DSC can be one of the indexes showing the qualify the PP film for the application. Thereafter, a PP film with only one melting peak and an initial melting point temperature of over 120°C and a key peak melting temperature of between about 160°C and about 180°C measured by DSC can be used for the thermal cure siliconizing coating application.

## Claims

1. A pressure sensitive adhesive sheet comprising a sheet-form substrate and a silicone pressure sensitive adhesive layer formed thereon, wherein the sheet-form substrate comprises at least one polyolefin-based resin film having a melting start temperature (Tmⁱ) of 120°C or higher and a peak melting temperature (Tm^{P}) of from 160°C to 180°C, measured by differential scanning calorimetry (DSC) according to ASTM D3418 as described hereinbefore in the description,
wherein the sheet-form substrate is selected from the group consisting of at least one polypropylene homopolymer resin film, at least one polypropylene block-copolymer resin film consisting of polypropylene units and other non-propylene olefin units, and a combination thereof, and wherein the silicone pressure sensitive adhesive layer is an addition-cured releasable silicone pressure sensitive adhesive layer which is obtained by heat-curing a silicone pressure sensitive adhesive composition comprising:
(a) polydiorganosiloxane having an average of at least two alkenyl radicals per molecule,
(b) organohydrogenpolysiloxane having an average of more than two silicon-bonded hydrogen atoms per molecule,
(c) an optional organopolysiloxane resin,
(d) a platinum-type catalyst,
(e) an optional solvent, and
(f) an optional inhibitor.

2. The pressure sensitive adhesive sheet according to claim 1, wherein the sheet-form substrate is selected from the group consisting of a single-layered polyolefin-based resin film and a multi-layered polyolefin-based resin film.

3. The pressure sensitive adhesive sheet according to claim 2, wherein the sheet-form substrate is a three-layered polyolefin plastic film.

4. The pressure sensitive adhesive sheet according to any of claims 1 to 3, wherein the other non-propylene olefin units are selected from the group consisting of ethylene, 1-butene, 2-methyl-1-butene, 3-methyl-1-butene, 1-hexene, 2-ethyl-1-butene, 2,3-dimethyl-1-butene, 2- methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, methyl-1-pentene, ethyl-1-hexene, dimethyl-1-hexene, propyl-1-heptene, methylethyl-1-heptene, trimethyl-1-pentene, propyl-1-pentene, diethyl-1-butene, 1-nonene, 1-decene, 1-undecene, and 1-dodecene.

5. The pressure sensitive adhesive sheet according to claim 4, wherein the polypropylene block-copolymer resin film contains from 50 wt% to 100 wt% of propylene units in structure.

6. The pressure sensitive adhesive sheet according to any of Claims 1 to 3, wherein the polyolefin-based resin film is selected from the group consisting of a casting polypropylene (CPP) film, a bi-axially oriented polypropylene (BOPP) film, and a blown polypropylene film.

7. The pressure sensitive adhesive sheet according to any of Claims 1 to 3, wherein the sheet-form substrate has a thickness of from 25 µm to 150 µm.

8. Use of the pressure sensitive adhesive sheet according to any of claims 1 to 3, for protecting panel display devices.

9. Use of the pressure sensitive adhesive sheet according to any of claims 1 to 3, for window decorating articles or constructions.

10. Use of the pressure sensitive adhesive sheet according to any of claims 1 to 3, for use as a coating film for automobiles.

11. A laminated structure comprising the pressure sensitive adhesive sheet according to any of claims 1 to 7 and a release layer placed on a surface of the silicone pressure sensitive adhesive layer of the pressure sensitive adhesive sheet.

12. A method of producing the pressure sensitive adhesive sheet according to any of claims 1 to 7, which comprises the steps of:
applying a silicone pressure sensitive adhesive composition on at least one surface of a sheet-form substrate, wherein the sheet-form substrate comprises at least one polyolefin-based resin film having a melting start temperature (Tmⁱ) of 120°C or higher, and a peak melting temperature (Tm^{P}) of from 160°C to 180°C, measured by differential scanning calorimetry (DSC), and
heat-curing the silicone pressure sensitive adhesive composition at a temperature below the peak melting temperature of the polyolefin-based resin film to form the silicone pressure sensitive adhesive layer on the sheet-form substrate.

## Patentansprüche

1. Ein Haftkleberflächengebilde, das ein flächenförmiges Substrat und eine darauf gebildete Silikon-Haftkleberschicht beinhaltet, wobei das flächenförmige Substrat mindestens eine Harzfolie auf Polyolefinbasis mit einer Schmelzbeginntemperatur (Tmⁱ) von 120 °C oder höher und einer Spitzenschmelztemperatur (Tm^{p}) von 160 °C bis 180 °C, gemessen durch Differentialscanningkalorimetrie (DSK) gemäß ASTM D3418, wie oben in der Beschreibung beschrieben, beinhaltet,
wobei das flächenförmige Substrat aus der Gruppe ausgewählt ist, die aus mindestens einer Polypropylenhomopolymerharzfolie, mindestens einer Polypropylenblockcopolymerharzfolie, die aus Polypropyleneinheiten und anderen Nichtpropylen-Olefineinheiten besteht, und einer Kombination davon besteht, und wobei die Silikon-Haftkleberschicht eine additionsgehärtete, trennbare Silikon-Haftkleberschicht ist, die durch Wärmehärten einer Silikon-Haftkleberzusammensetzung erhalten wird, die Folgendes beinhaltet:
(a) Polydiorganosiloxan mit einem Durchschnitt von mindestens zwei Alkenylresten pro Molekül,
(b) Organohydrogenpolysiloxan mit einem Durchschnitt von mehr als zwei siliciumgebundenen Wasserstoffatomen pro Molekül,
(c) ein optionales Organopolysiloxanharz,
(d) einen platinartigen Katalysator,
(e) ein optionales Lösungsmittel und
(f) einen optionalen Hemmstoff.

2. Haftkleberflächengebilde gemäß Anspruch 1, wobei das flächenförmige Substrat aus der Gruppe ausgewählt ist, die aus einer einschichtigen Harzfolie auf Polyolefinbasis und einer mehrschichtigen Harzfolie auf Polyolefinbasis besteht.

3. Haftkleberflächengebilde gemäß Anspruch 2, wobei das flächenförmige Substrat eine dreischichtige Polyolefinkunststofffolie ist.

4. Haftkleberflächengebilde gemäß einem der Ansprüche 1 bis 3, wobei die anderen Nichtpropylen-Olefineinheiten aus der Gruppe ausgewählt sind, die aus Ethylen, 1-Buten, 2-Methyl-1-buten, 3-Methyl-1-buten, 1-Hexen, 2-Ethyl-1-buten, 2,3-Dimethyl-1-buten, 2-Methyl-1-penten, 3-Methyl-1-penten, 4-Methyl-1-penten, 3,3-Dimethyl-1-buten, 1-Hepten, Methyl-1-hexen, Dimethyl-1-penten, Ethyl-1-penten, Trimethyl-1-buten, Methylethyl-1-buten, 1-Octen, Methyl-1-penten, Ethyl-1-hexen, Dimethyl-1-hexen, Propyl-1-hepten, Methylethyl-1-hepten, Trimethyl-1-penten, Propyl-1-penten, Diethyl-1-buten, 1-Nonen, 1-Decen, 1-Undecen und 1-Dodecen besteht.

5. Haftkleberflächengebilde gemäß Anspruch 4, wobei die Polypropylenblockcopolymerharzfolie in der Struktur zu 50 Gew.-% bis 100 Gew.-% Propyleneinheiten enthält.

6. Haftkleberflächengebilde gemäß einem der Ansprüche 1 bis 3, wobei die Harzfolie auf Polyolefinbasis aus der Gruppe ausgewählt ist, die aus einer Polypropylen-Gießfolie (CPP-Folie), einer biaxial orientierten Polypropylen-Folie (BOPP-Folie) und einer Polypropylen-Blasfolie besteht.

7. Haftkleberflächengebilde gemäß einem der Ansprüche 1 bis 3, wobei das flächenförmige Substrat eine Dicke von 25 µm bis 150 µm aufweist.

8. Eine Verwendung des Haftkleberflächengebildes gemäß einem der Ansprüche 1 bis 3 zum Schutz von Anzeigefeldvorrichtungen.

9. Eine Verwendung des Haftkleberflächengebildes gemäß einem der Ansprüche 1 bis 3 für Fensterdekorationsartikel oder -konstruktionen.

10. Eine Verwendung des Haftkleberflächengebildes gemäß einem der Ansprüche 1 bis 3 zur Verwendung als Beschichtungsfolie für Automobile.

11. Eine laminierte Struktur, die das Haftkleberflächengebilde gemäß einem der Ansprüche 1 bis 7 und eine Trennschicht, die auf einer Oberfläche der Silikon-Haftkleberschicht des Haftkleberflächengebildes platziert ist, beinhaltet.

12. Ein Verfahren zum Herstellen des Haftkleberflächengebildes gemäß einem der Ansprüche 1 bis 7, das die folgenden Schritte beinhaltet:
Auftragen einer Silikon-Haftkleberzusammensetzung auf mindestens eine Oberfläche eines flächenförmigen Substrats, wobei das flächenförmige Substrat mindestens eine Harzfolie auf Polyolefinbasis mit einer Schmelzbeginntemperatur (Tmⁱ) von 120 °C oder höher und einer Spitzenschmelztemperatur (Tm^{p}) von 160 °C bis 180 °C, gemessen durch Differentialscanningkalorimetrie (DSK), beinhaltet, und
Wärmehärten der Silikon-Haftkleberzusammensetzung bei einer Temperatur unterhalb der Spitzenschmelztemperatur der Harzfolie auf Polyolefinbasis, um die Silikon-Haftkleberschicht auf dem flächenförmigen Substrat zu bilden.

## Revendications

1. Une feuille d'adhésif sensible à la pression comprenant un substrat en forme de feuille et une couche d'adhésif sensible à la pression en silicone formée sur celui-ci, dans laquelle le substrat en forme de feuille comprend au moins un film de résine à base de polyoléfine ayant une température de début de fusion (Tmⁱ) de 120 °C ou plus et une température de fusion maximale (Tm^{p}) allant de 160 °C à 180 °C, mesurées par calorimétrie différentielle à balayage (DSC) selon l'ASTM D3418 comme décrit précédemment ici dans la description,
dans laquelle le substrat en forme de feuille est sélectionné dans le groupe constitué d'au moins un film de résine homopolymère polypropylène, d'au moins un film de résine copolymère séquencé polypropylène constitué d'unités de polypropylène et d'autres unités d'oléfine non propylène, et d'une combinaison de ceux-ci, et dans laquelle la couche d'adhésif sensible à la pression en silicone est une couche d'adhésif sensible à la pression en silicone décollable durcie par addition qui est obtenue par thermodurcissement d'une composition d'adhésif sensible à la pression en silicone comprenant :
(a) un polydiorganosiloxane ayant une moyenne d'au moins deux radicaux alcényle par molécule,
(b) un organohydrogénopolysiloxane ayant une moyenne de plus de deux atomes d'hydrogène liés au silicium par molécule,
(c) une résine organopolysiloxane facultative,
(d) un catalyseur de type platine,
(e) un solvant facultatif, et
(f) un inhibiteur facultatif.

2. La feuille d'adhésif sensible à la pression selon la revendication 1, dans laquelle le substrat en forme de feuille est sélectionné dans le groupe constitué d'un film de résine à base de polyoléfine monocouche et d'un film de résine à base de polyoléfine multicouche.

3. La feuille d'adhésif sensible à la pression selon la revendication 2, dans laquelle le substrat en forme de feuille est un film plastique de polyoléfine à trois couches.

4. La feuille d'adhésif sensible à la pression selon n'importe lesquelles des revendications 1 à 3, dans laquelle les autres unités d'oléfine non propylène sont sélectionnées dans le groupe constitué de l'éthylène, du 1-butène, du 2-méthyl-1-butène, du 3-méthyl-1-butène, du 1-hexène, du 2-éthyl-1-butène, du 2,3-diméthyl-1-butène, du 2-méthyl-1-pentène, du 3-méthyl-1-pentène, du 4-méthyl-1-pentène, du 3,3-diméthyl-1-butène, du 1-heptène, du méthyl-1-hexène, du diméthyl-1-pentène, de l'éthyl-1-pentène, du triméthyl-1-butène, du méthyléthyl-1-butène, du 1-octène, du méthyl-1-pentène, de l'éthyl-1-hexène, du diméthyl-1-hexène, du propyl-1-heptène, du méthyléthyl-1-heptène, du triméthyl-1-pentène, du propyl-1-pentène, du diéthyl-1-butène, du 1-nonène, du 1-décène, du 1-undécène, et du 1-dodécène.

5. La feuille d'adhésif sensible à la pression selon la revendication 4, dans laquelle le film de résine copolymère séquencé polypropylène contient de 50 % en poids à 100 % en poids d'unités de propylène dans la structure.

6. La feuille d'adhésif sensible à la pression selon n'importe lesquelles des revendications 1 à 3, dans laquelle le film de résine à base de polyoléfine est sélectionné dans le groupe constitué d'un film de polypropylène coulé (CPP), d'un film de polypropylène orienté biaxialement (BOPP), et d'un film de polypropylène soufflé.

7. La feuille d'adhésif sensible à la pression selon n'importe lesquelles des revendications 1 à 3, dans laquelle le substrat en forme de feuille a une épaisseur allant de 25 µm à 150 µm.

8. Utilisation de la feuille d'adhésif sensible à la pression selon n'importe lesquelles des revendications 1 à 3, pour la protection de dispositifs d'affichage à écran.

9. Utilisation de la feuille d'adhésif sensible à la pression selon n'importe lesquelles des revendications 1 à 3, pour des articles ou des constructions de décoration de fenêtres.

10. Utilisation de la feuille d'adhésif sensible à la pression selon n'importe lesquelles des revendications 1 à 3, pour une utilisation en tant que film de revêtement pour automobiles.

11. Une structure stratifiée comprenant la feuille d'adhésif sensible à la pression selon n'importe lesquelles des revendications 1 à 7 et une couche à décoller placée sur une surface de la couche d'adhésif sensible à la pression en silicone de la feuille d'adhésif sensible à la pression.

12. Un procédé de production de la feuille d'adhésif sensible à la pression selon n'importe lesquelles des revendications 1 à 7, qui comprend les étapes :
d'application d'une composition d'adhésif sensible à la pression en silicone sur au moins une surface d'un substrat en forme de feuille, dans lequel le substrat en forme de feuille comprend au moins un film de résine à base de polyoléfine ayant une température de début de fusion (Tmⁱ) de 120 °C ou plus, et une température de fusion maximale (Tm^{p}) allant de 160 °C à 180 °C, mesurées par calorimétrie différentielle à balayage (DSC), et
de thermodurcissement de la composition d'adhésif sensible à la pression en silicone à une température en deçà de la température de fusion maximale du film de résine à base de polyoléfine afin de former la couche d'adhésif sensible à la pression en silicone sur le substrat en forme de feuille.
